# EUROPÄISCHE PATENTSCHRIFT

(11) **EP 2 893 247 B1**
(45) Veröffentlichungstag und Bekanntmachung des Hinweises auf die Patenterteilung: **21.08.2019**
(21) Anmeldenummer: 13753417.8
(22) Anmeldetag: 27.08.2013
(51) Int. Cl.: F17C 5/00, F17C 5/02, F17C 5/06

(54) **VERFAHREN ZUR DURCHFÜHRUNG EINES DRUCKTESTS AN EINEM TANK UND BETANKUNGSEINRICHTUNG**
METHOD FOR PERFORMING A PRESSURE TEST ON A TANK AND TANK FILLING APPARATUS
PROCÉDÉ POUR EFFECTUER UN ESSAI DE PRESSION AU NIVEAU D'UN RÉSERVOIR ET DISPOSITIF DE REMPLISSAGE DE RÉSERVOIR

(30) Priorität: 04.09.2012 DE 102012017489; 13.09.2012 DE 102012018109
(43) Veröffentlichungstag der Anmeldung: 15.07.2015
(73) Patentinhaber: Linde Aktiengesellschaft, 80331 München (DE)
(72) Erfinder: ADLER, Robert, 2201 Gerasdorf (AT); PFANDL, Martin, Rust im Tullnerfeld (AT); RASCH, Markus, 2392 Sulz in Wienerwald (AT); STEFAN, Michael, 2492 Zillingdorf (AT)
(74) Vertreter: Zahn, Christoph
(86) Internationale Anmeldenummer: PCT/EP2013/002583
(87) Internationale Veröffentlichungsnummer: WO 2014/037085

(56) Entgegenhaltungen:
- EP-A1- 0 653 585
- EP-A1- 1 772 663
- EP-A2- 1 291 574
- DE-A1-102007 012 080
- US-A1- 2002 014 277
- US-A1- 2011 056 571

## Beschreibung

Die Erfindung betrifft ein Verfahren zur Durchführung eines Drucktests an einem Tank.

Eine Betankungseinrichtung zum Betanken eines Tanks mit einem gasförmigen, unter Druck stehenden Medium, insbesondere in Form von Wasserstoff, wird ebenfalls offenbart.

Fahrzeuge, die als Treibstoff gasförmigen Wasserstoff tanken, benötigen speziell ausgebildete Betankungseinrichtungen, die den unter vergleichsweise hohem Druck stehenden Wasserstoff (z.B. 700 bar) in den (Fahrzeug)tank oder einen sonstigen Wasserstofftank leiten. Für gewöhnlich weist eine solche Tankstelle einen Speicher mit flüssigem Wasserstoff auf oder ist direkt an eine Wasserstoff-Pipeline oder andere Anlagen, die einen Wasserstoffspeicher darstellen können, angeschlossen. Da der Wasserstoff für die Betankung in der gasförmigen Phase vorliegen soll, verfügt eine Tankstelle für gewöhnlich über einen Gaspufferspeicher, der sich aus dem vorgenannten (Flüssigwasserstoff-) Speicher speist und den gasförmigen Wasserstoff vorhält.

In DE102007012080A1 wird ein Druckstosstest zur Bestimmung des Speicherbehälterinnendrucks eines zu betankenden Fahrzeugs durchgeführt. Eine Abgabevorrichtung für kryogene Medien, insbesondere mit einer Druckreduzierung von komprimierten Gasen ist unter anderem in US2011/0056571A1 beschrieben.

Um die Sicherheit (Explosionsgefahr) für die Umwelt beim Betanken von Wasserstofftanks (z.B. Fahrzeugtanks) mit Wasserstoff zu gewährleisten und um einen Standard für den Betankungsprozess zu schaffen, einigte sich ein Konsortium bestehend u.a. aus mehreren Fahrzeugherstellern auf den Standard SAE J2601. Der Standard gibt u.a. sicherheitsrelevante Grenzen und Leistungsanforderungen für den Tankvorgang vor. SAE J2601 sieht vor, dass wasserstoffgetriebene Fahrzeuge innerhalb von drei Minuten auf 700 bar betankt werden, ohne dass dabei die Temperatur des Tanks über eine Temperatur von 85°C ansteigt.

Des Weiteren sieht der Standard SAE J2601 vor, dass vor dem Betanken des Tanks ein Druck- und Dichtheitstest durchgeführt wird; unter anderem um zu gewährleisten, dass die Tankzuleitung der Tankstelle korrekt am zu betankenden Tank angeschlossen wurde.

Bei besagtem Drucktest wird der Druck im Tank ermittelt. Dies geschieht über einen kurzen Druckstoß seitens der Tankstelle, um den betreffenden Tank zu öffnen, der durch ein Tankventil (in der Regel ein Rückschlagventil) gesichert ist. Anschließend wird der sich in der Tankzuleitung einstellende Druck, der dann gleich dem Druck im Tank ist, in der Tankstelle über eine gewisse Zeit (Warteperiode ca. 5-20 s) gemessen, um sicherzustellen, dass kein nennenswerter Druckabfall stattfindet (Dichtheitstest), welcher auf ein Problem, wie beispielsweise einem Leck in der Tankzuleitung bzw. in der Verbindung mit dem Tank, hinweisen würde.

Der Druckstoß für den Druck- und Dichtheitstest wird dabei in der Regel direkt vom Gaspufferspeicher durch das relativ schnelle Öffnen von Ventilen durchgeführt, was zu hohen Masseströmen führt, aus denen dann enorme Druckspitzen entstehen können, so dass nachgeschaltete Elemente in den Rohrleitungen oder der Tankzuleitung, wie z.B. Drucktransmitter, Thermometer, Durchflussmessgeräte, Ventile und Rampenregler, diesem Druckstoß (ca. 800-850 bar) voll ausgesetzt sind.

Des Weiteren kommt es bei dieser Art des unmittelbar vom Gaspufferspeicher durchgeführten Druckstoßes beim Start (nach besagter Warteperiode) des eigentlichen Betankungsvorgangs oftmals zu einem weiteren Druckpeak in den nachgeschalteten Elementen, der auf ein unter Druck stehendes Restvolumen in Teilen der Rohrleitung zurückzuführen ist. Derartige Lastwechsel in der Rohrleitung und Tankzuleitung tragen zur schnelleren Abnutzung der nachgeschalteten Elemente und damit zu einer erhöhten Fehleranfälligkeit und Verkürzung der Lebensdauer dieser Komponenten bei.

Zudem sind zum Zeitpunkt des Druckstoßes in der Regel noch keine Abschaltungen über Temperatur, Druck oder Druckabfall (Leckage) aktiv, so dass es beim Druckstoß in ungünstigen Fällen auch zur Überhitzung, Überfüllung eines Tanks oder zu einer teilweisen Befüllung eines undichten Tanks kommen kann.

Hiervon ausgehend liegt daher der vorliegenden Erfindung die Aufgabe zugrunde, ein Verfahren sowie eine Vorrichtung der eingangs genannten Art zu schaffen, bei dem bzw. bei der die genannten Belastungen gemindert sind.

Dieses Problem wird durch ein Verfahren zur Durchführung eines Drucktests an einem (Wasserstoff)tank mit den Merkmalen des Anspruchs 1 gelöst.

Danach ist vorgesehen, dass der Tank über ein Tankventil mit einer Tankzuleitung verbunden wird, die ein erstes Ventil zum Unterbrechen der Tankzuleitung aufweist, wobei bei dem Drucktest vor dem Betanken des Tanks mit dem gasförmigen, unter Druck stehenden Medium (z.B. Wasserstoff) über die Tankzuleitung ein (gasförmiger) Stoffstrom des Mediums (z.B. Wasserstoffstrom) bei geschlossenem ersten Ventil über eine das erste Ventil überbrückende Bypass-Leitung zum Tank geleitet wird, wobei der Stoffstrom in der Bypass-Leitung gedrosselt wird, so dass ein auf das Tankventil wirkender Tankzuleitungsdruck zur Vermeidung eines Druckpeaks bzw. -stoßes kontrolliert, d.h. ohne Ausbildung eines Druckpeaks allmählich (insbesondere innerhalb einer vordefinierten Zeitspanne) ansteigt, bis sich insbesondere das Tankventil öffnet, wenn der Tankzuleitungsdruck den im Tank herrschenden Tankdruck übersteigt.

Die Drosselung verursacht also mit Vorteil bevorzugt einen hohen Druckverlust, wodurch auch nur ein geringer Massedurchfluss des Mediums (z.B. Wasserstoff) möglich ist und der Druckschlag auf die nachfolgenden Bauteile gemindert wird.

Bevorzugt wird sodann nach dem Öffnen des Tankventils der im Tank herrschende Tankdruck als der momentane Tankzuleitungsdruck angenommen (durch den Druckausgleich nach dem Öffnen des Tankventils entspricht der Tankzuleitungsdruck dem Tankdruck).

Bei dem besagtem Tank handelt es sich insbesondere um einen Tank eines Fahrzeuges zum Speichern von gasförmigem Wasserstoff, der insbesondere als Treibstoff zum Antreiben des Fahrzeuges dient.

Bevorzugt wird der gasförmige Stoffstrom mittels einer in der Bypass-Leitung vorgesehenen Drossel, also insbesondere durch eine Verengung des Bypass-Leitungsquerschnitts, gedrosselt, so dass der auf den Tank bzw. der auf das Tankventil wirkende Tankzuleitungsdruck stromab der Drossel zur Vermeidung des besagten Druckpeaks bzw. -stoßes kontrolliert ansteigt (siehe oben).

Bevorzugt ist die Bypass-Leitung mittels eines zweiten Ventils absperrbar, das vorzugsweise stromauf der Drossel in der Bypass-Leitung vorgesehen ist, wobei zur Durchführung des Drucktests bei geschlossenem ersten Ventil das zweite Ventil geöffnet wird und jener Stoffstrom über die Bypass-Leitung und deren Drossel zum Tank geleitet wird, wobei bevorzugt der Stoffstrom so gedrosselt wird, dass der Tankzuleitungsdruck den Tankdruck innerhalb einer vordefinierten Zeitspanne (insbesondere 10 s) erreicht.

Ist z.B. der Tank vollständig mit Wasserstoff bei einer Dichte von 40,2 g/l gefüllt, was bei Raumtemperatur ca. 700 bar entspricht, und beträgt das von der Tankzuleitung umschlossene Volumen stromab der Drossel 1 l, so drosselt die Drossel den Stoffstrom (Wasserstoffstrom) bevorzugt auf 4,1 g/s, da dann gewährleistet ist, dass der Tankzuleitungsdruck in 10 s auf über 700 bar ansteigt und somit das Tankventil geöffnet wird.

Weiterhin wird bevorzugt die Bypass-Leitung mittels des zweiten Ventils unterbrochen, wenn das Tankventil des Tanks durch den ansteigenden Tankzuleitungsdruck geöffnet wird, also wenn der Tankzuleitungsdruck den im Wasserstofftank bislang herrschenden Tankdruck übersteigt.

Bevorzugt werden das erste und das zweite Ventil pneumatisch geregelt.

Vorzugsweise herrscht vor dem Betanken, also insbesondere während des Drucktests, stromauf des ersten Ventils ein vordefinierter Maximaldruck in der Tankzuleitung von insbesondere 875 bar.

Dieser Maximaldruck bestimmt sich maßgeblich über den vom Gaspufferspeicher der Tankstelle zur Verfügung gestellten Druck (Medium bzw. Wasserstoff) und ist so bemessen, dass er über dem höchstanzunehmenden Tankdruck liegt, um ein Öffnen des Tanks und damit ein Ermitteln des Tankdrucks mit Sicherheit zu gewährleisten.

Zum Bestimmen des Tankdrucks wird der Tankzuleitungsdruck aufgenommen, wobei der sich nach dem Öffnen des Tankventils in der Tankzuleitung einstellende Tankzuleitungsdruck des Mediums bzw. des Wasserstoffes als Tankdruck ermittelt wird.

Nach Durchführung des Drucktestes und vor dem eigentlichen Betanken des Tanks (Fahren einer Druckrampe) wird bevorzugt eine gewisse Zeitspanne (bevorzugt 5s bis 25s) gewartet, so dass anhand eines etwaigen Druckabfalls des Tankzuleitungsdruckes in der Tankzuleitung eine etwaige Undichtigkeit in der Verbindung zum Tank erfassbar ist (Dichtheitstest). Vorzugsweise wird bei bestehender Dichtheit der eigentliche Betankungsvorgang eingeleitet (Fahren einer Druckrampe ausgehend von dem ermittelten Tankdruck als Startwert).

Des Weiteren wird das Problem durch eine Betankungseinrichtung zum Betanken eines Tanks mit einem unter Druck stehenden, gasförmigen Medium, insbesondere in Form von Wasserstoff, gelöst.

Danach weist die Betankungseinrichtung (Tankstelle) eine Tankzuleitung mit einem ersten Ventil zum Absperren der Tankzuleitung auf, wobei die Tankzuleitung dazu ausgebildet ist, stromab des ersten Ventils mit einem Tankventil eines zu betankenden Tanks strömungsleitend verbunden zu werden. Weiterhin weist die Betankungseinrichtung eine das erste Ventil überbrückende Bypass-Leitung mit einem zweiten Ventil und einer Drossel (z.B. Verengung des Bypass-Leitungsquerschnitts) auf, wobei die Drossel dazu ausgebildet ist - vor einem Betanken des Tanks über das erste Ventil - bei geschlossenem ersten Ventil und geöffnetem zweiten Ventil einen über die Bypass-Leitung geführten (gasförnigen) Stoffstrom des Mediums (z.B. Wasserstoffstrom) derart zu drosseln, dass der sich in der Tankzuleitung einstellende Tankzuleitungsdruck stromab der Drossel kontrolliert, also vergleichsweise langsam (insbesondere über eine vordefinierbare Zeitspanne) ansteigt (siehe oben).

Die Bypass-Leitung weist zum Überbrücken der Tankzuleitung entsprechend zwei Enden auf, wobei ein erstes Ende stromauf und das zweite Ende stromab des ersten Ventils strömungsleitend mit der Tankzuleitung verbunden ist.

Bevorzugt ist die Drossel stromab des zweiten Ventils in der Bypass-Leitung angeordnet.

Im Ergebnis ermöglicht die Erfindung insbesondere die Minimierung der Belastung von gasführenden Bauteilen in Betankungseinrichtungen zur Betankung von Tanks mit gasförmigem Wasserstoff (und anderen gasförmigen und unter Druck stehenden Medien) sowie die Minimierung der Fehleranfälligkeit bei Druckhaltetests durch die Vermeidung der Temperaturerhöhung aufgrund von schlagartiger Verdichtung. Weiterhin wird insbesondere die durch den Druckstoß betankte Gasmenge minimiert, so dass bei vollen Tanks praktisch kein Massestrohm mehr in den Tank erfolgt.

Weitere Einzelheiten und Vorteile der Erfindung sollen durch die nachfolgenden Figurenbeschreibungen eines Ausführungsbeispiels anhand der Figuren erläutert werden.

Es zeigen:
- Fig. 1: eine schematische Darstellung einer erfindungsgemäßen Betankungseinrichtung; und
- Fig. 2: eine zeitlichen Druckverlauf in der Tankzuleitung bei einem nach dem Stand der Technik durchgeführten Druck- und Dichtheitstest.

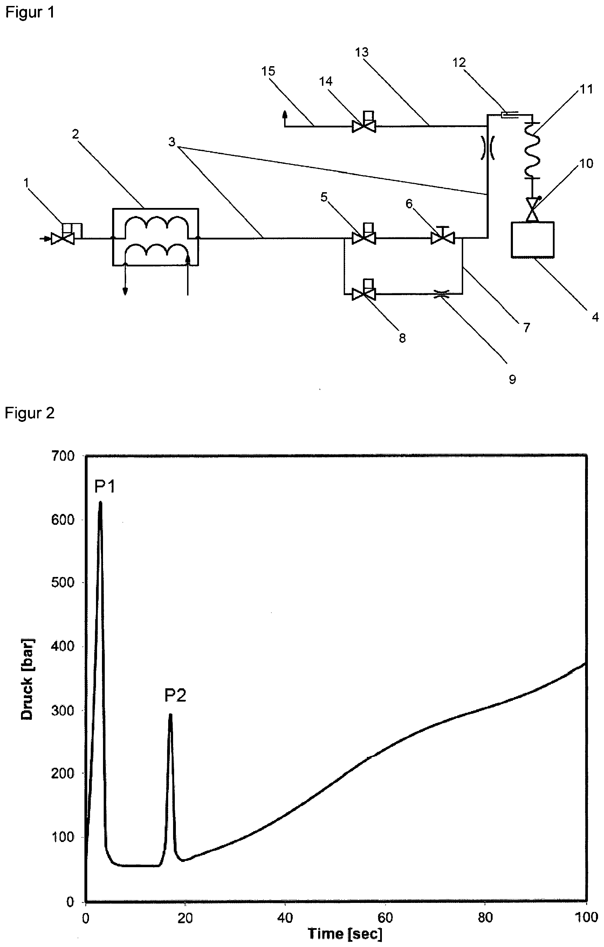

Figur 1 zeigt eine schematische Darstellung einer Betankungseinrichtung (Tankstelle), mit einem Rampenventil 1, das mittels eines Rampenreglers geregelt wird. Stromab des Rampenventils 1 ist eine Kältemaschine 2 ("Alu Coldfill") angeordnet, die einen durch das Rampenventil 1 strömenden Wasserstoffstrom (z.B. aus einem Gaspufferspeicher) auf insbesondere -40°C temperiert. An die Kältemaschine 2 schließt sich strömungsleitend eine Tankzuleitung 3 an, die ein erstes, insbesondere pneumatisches Ventil 5 gefolgt von einem Handventil 6 stromab der Kältemaschine aufweist. Das erste Ventil 5 und das Handventil 6 überbrückend, ist eine Bypass-Leitung 7 angeordnet, die strömungsleitend mit der Tankzuleitung 3 verbunden ist. Die Bypass-Leitung 7 weist ein zweites, insbesondere pneumatisches, Ventil 8 gefolgt von einer Drossel 9 auf. Stromab der Drossel 9 ist ein Durchflussmessgerät 13 in der Tankzuleitung 3 angeordnet. Stromab des Durchflussmessgerätes 13 zweigt eine Kaminleitung 15 von der Tankzuleitung 3 ab. Die Kaminleitung 15 ist über ein Sicherheitsventil 14 mit einem Kamin verbunden, der dazu dient, überschüssigen Wasserstoff (bzw. überschüssiges Medium) sicher in die Umwelt abzugeben (z.B. um einen Überdruck in der Tankzuleitung 3 abzubauen). Stromab des Abzweigs der Kaminleitung 15 weist die Tankzuleitung 3 weiterhin aus Sicherheitsgründen eine Abreißkupplung 12 auf, die sich unter Zug öffnet (wenn z.B. ein PKW mit angekuppeltem Schlauch wegfährt) sowie einen nachfolgenden Tankschlauch 11 mit einer Tankkupplung, die mit dem Tank (Wasserstofftank) 4 verbindbar ist. Der Tank 4 ist mit einem Tankventil 10 (Rückschlagventil) zum Verschließen des Tanks 4 gesichert.

Figur 2 zeigt den zeitlichen Druckverlauf bei Durchführung des Druck- und Dichtheitstest sowie den Anfang des eigentlichen Betankungsvorgangs nach dem Stand der Technik gemäß dem Standard SAE J2601 an einer herkömmlichen Tankstelle. Dabei wird ein Druckstoß vor dem Betanken direkt aus einem Gaspufferspeicher (ca. 850 bar) durchgeführt. Der Druck in der Tankzuleitung, über die der Tank betankt wird, weist entsprechend vor dem Durchfahren einer Druckrampe (ansteigender Druckast rechts) zum Betanken des Tanks deutliche Peaks P1, P2 auf, die aus dem Bedrücken der Tankzuleitung mit Wasserstoff aus dem Gaspufferspeicher resultieren.

Bei der Durchführung des erfindungsgemäßen Verfahrens zur Durchführung eines Drucktests hingegen wird vor dem Öffnen des ersten Ventils 5 zum Betanken des Tanks 4 mit gasförmigen, unter Druck stehenden Wasserstoff zunächst das zweite Ventil 8 geöffnet, wobei durch die Drossel 9 sodann der Wasserstoffstrom im stromab der Drossel 9 folgenden Verlauf der Tankzuleitung 3 gedrosselt wird, so dass der Tankzuleitungsdruck in der Tankzuleitung 3 vergleichsweise langsamer, also unter Vermeidung eines merklichen Druckpeaks, kontrolliert (insbesondere monoton) ansteigt. Der Tankzuleitungsdruck steigt dabei solange an, bis er größer ist als der im Tank 4 herrschende Tankdruck. Hierdurch wird das Tankventil 10 geöffnet bzw. aufgedrückt und ein Druckausgleich zwischen dem Tank 4 und der Tankzuleitung 3 initiiert. Der Tankdruck wird nunmehr als der in der Tankzuleitung gemessene Tankzuleitungsdruck angenommen (Drucktest). Durch entsprechendes Auslegen der Drossel erfolgt das Ansteigen des Tankzuleitungsdruckes in der Tankzuleitung auf den Tankdruck innerhalb einer vordefinierbare Zeitspanne. Allgemein kann die Drossel entsprechend einstellbar gestaltet sein.

Bleibt der so ermittelte Tankdruck über eine gewisse Zeitspanne (im Bereich von 5s bis 25s) konstant, kann auf eine dichte Verbindung zum Tank 4 geschlossen werden. Bei erfolgreichem Dichtheitstest wird sodann der eigentliche Betankungsvorgang (z.B. nach SAE J2601) über das erste Ventil 5 sowie das Rampenventil 1 durchgeführt, indem ausgehend vom Tankdruck als Startwert eine entsprechenden Druckrampe gefahren wird. Hierbei steigt der Tankzuleitungsdruck in der Tankzuleitung bzw. der Tankdruck im Tank ausgehend vom besagten Startwert durch Befüllen des Tanks mit gasförmigem Wasserstoff im Wesentlichen linear an.

**Bezugszeichenliste**

| | |
|---|---|
| 1 | Rampenventil |
| 2 | Kältemaschine (Alu Coldfill) |
| 3 | Tankzuleitung |
| 4 | Tank |
| 5 | Erstes (pneumatisches)Ventil |
| 6 | Handventil |
| 7 | Bypass-Leitung |
| 8 | Zweites (pneumatisches) Ventil |
| 9 | Drossel |
| 10 | Tankventil |
| 11 | Tankschlauch mit Tankkupplung |
| 12 | Abreißkupplung |
| 13 | Durchflussmessgerät |
| 14 | Sicherheitsventil |
| 15 | Kaminleitung |
| P1, P2 | Druckpeak |

## Patentansprüche

1. Verfahren zur Durchführung eines Drucktests an einem Tank (4), wobei der Tank (4) über ein Tankventil (10) mit einer Tankzuleitung (3) verbunden ist, die ein erstes Ventil (5) zum Unterbrechen der Tankzuleitung (3) aufweist, wobei das erste Ventil zum Betanken des Tanks geöffnet wird, **dadurch gekennzeichnet, dass** bei dem Drucktest vor dem Betanken des Tanks (4) über die Tankzuleitung (3) ein Stoffstrom eines gasförmigen, unter Druck stehenden Mediums, insbesondere in Form von Wasserstoff, bei geschlossenem ersten Ventil (5) über eine das erste Ventil (5) überbrückende Bypass-Leitung (7) zum Tank (4) geleitet wird, mittels einer in der Bypass-Leitung (7) vorgesehenen Drossel (9) gedrosselt wird, so dass ein auf das Tankventil (10) wirkender Tankzuleitungsdruck stromab der Drossel (9) kontrolliert ansteigt, wobei insbesondere das Tankventil (10) geöffnet wird, wenn der Tankzuleitungsdruck den im Tank (4) herrschenden Tankdruck übersteigt, wobei der Tankzuleitungsdruck gemessen wird und der sich nach dem Öffnen des Tankventils (10) in der Tankzuleitung (3) einstellende Tankzuleitungsdruck als Tankdruck bestimmt wird.

2. Verfahren nach Anspruch 1, **dadurch gekennzeichnet, dass** die Bypass-Leitung (7) mittels eines zweiten Ventils (8) absperrbar ist, das insbesondere stromauf der Drossel (9) in der Bypass-Leitung (7) vorgesehen ist, wobei zur Durchführung des Drucktests bei geschlossenem ersten Ventil (5) das zweite Ventil (8) geöffnet wird und jener Stoffstrom über die Bypass-Leitung (7) zum Tank (4) geleitet wird.

3. Verfahren nach Anspruch 2, **dadurch gekennzeichnet, dass** der Stoffstrom in der Bypass-Leitung (7) so gedrosselt wird, dass der Tankzuleitungsdruck nach besagtem Öffnen des zweiten Ventils (8) innerhalb einer vordefinierten Zeitspanne den Tankdruck erreicht, insbesondere innerhalb von 10 s.

4. Verfahren nach Anspruch 2 oder 3, **dadurch gekennzeichnet, dass** die Bypass-Leitung (7) mittels des zweiten Ventils (8) abgesperrt wird, wenn das Tankventil (10) des Tanks (4) durch den ansteigenden Tankzuleitungsdruck aufgedrückt wird.

5. Verfahren nach einem der vorhergehenden Ansprüche, **dadurch gekennzeichnet, dass** vor dem Betanken stromauf des ersten Ventils (5) ein vordefinierter Maximaldruck in der Tankzuleitung (3) von insbesondere 875 bar herrscht.

## Claims

1. Method for performing a pressure test on a tank (4), wherein the tank (4) is connected via a tank valve (10) to a tank feed line (3), which has a first valve (5) for interrupting the tank feed line (3), wherein the first valve is opened for filling the tank, **characterized in that** during the pressure test, prior to the tank (4) being filled via the tank feed line (3), a substance flow of a gaseous, pressurized medium, in particular in the form of hydrogen, is directed to the tank (4), with the first valve (5) closed, via a bypass line (7) bridging the first valve (5), is throttled by means of a throttle (9) provided in the bypass line (7) such that downstream of the throttle (9) a tank feed-line pressure acting on the tank valve (10) rises in a controlled manner, wherein the tank valve (10) is opened in particular when the tank feed-line pressure exceeds the tank pressure prevailing in the tank (4), wherein the tank feed-line pressure is measured and the tank feed-line pressure that is established after the opening of the tank valve (10) in the tank feed line (3) is determined as the tank pressure.

2. Method according to Claim 1, **characterized in that** the bypass line (7) can be shut off by means of a second valve (8), which is provided in particular upstream of the throttle (9) in the bypass line (7), wherein, for carrying out the pressure test, the second valve (8) is opened while the first valve (5) is closed and that substance flow is directed via the bypass line (7) to the tank (4).

3. Method according to Claim 2, **characterized in that** the substance flow in the bypass line (7) is throttled such that the tank feed-line pressure after said opening of the second valve (8) reaches the tank pressure within a predefined time period, in particular within 10 s.

4. Method according to Claim 2 and 3, **characterized in that** the bypass line (7) is shut off by means of the second valve (8) when the tank valve (10) of the tank (4) is forced open by the rising tank feed-line pressure.

5. Method according to one of the preceding claims, **characterized in that**, before the filling of the tank, a predefined maximum pressure, in particular 875 bar, prevails in the tank feed line (3) upstream of the first valve (5).

## Revendications

1. Procédé pour effectuer un essai de pression au niveau d'un réservoir (4), dans lequel le réservoir (4) est raccordé par l'intermédiaire d'une soupape de réservoir (10) à une conduite d'alimentation de réservoir (3), qui présente une première soupape (5) pour interrompre la conduite d'alimentation de réservoir (3), dans lequel on ouvre la première soupape pour le remplissage du réservoir, **caractérisé en ce que** lors de l'essai de pression avant le remplissage du réservoir (4) par la conduite d'alimentation de réservoir (3), on envoie au réservoir (4) un courant de matière d'un milieu gazeux se trouvant sous pression, en particulier d'hydrogène, avec la première soupape (5) fermée, via une conduite de dérivation (7) contournant la première soupape (5), on l'étrangle au moyen d'un étranglement (9) prévu dans la conduite de dérivation (7), de telle manière qu'une pression d'alimentation de réservoir agissant sur la soupape de réservoir (10) augmente de façon contrôlée en aval de l'étranglement (9), dans lequel en particulier on ouvre la soupape de réservoir (10) lorsque la pression d'alimentation de réservoir dépasse la pression de réservoir régnant dans le réservoir (4), dans lequel on mesure la pression d'alimentation de réservoir et on détermine comme pression de réservoir la pression d'alimentation de réservoir s'établissant dans la conduite d'alimentation de réservoir (3) après l'ouverture de la soupape de réservoir (10).

2. Procédé selon la revendication 1, **caractérisé en ce que** la conduite de dérivation (7) peut être fermée au moyen d'une deuxième soupape (8), qui est en particulier prévue en amont de l'étranglement (9) dans la conduite de dérivation (7), dans lequel pour l'exécution de l'essai de pression avec la première soupape (5) fermée on ouvre la deuxième soupape (8) et on envoie ce courant de matière au réservoir (4) par la conduite de dérivation (7) .

3. Procédé selon la revendication 2, **caractérisé en ce que** l'on étrangle le courant de matière dans la conduite de dérivation (7), de telle manière que la pression d'alimentation de réservoir après ladite ouverture de la deuxième soupape (8) atteigne la pression de réservoir à l'intérieur d'un laps de temps prédéfini, en particulier à l'intérieur de 10 s.

4. Procédé selon une revendication 2 ou 3, **caractérisé en ce que** l'on ferme la conduite de dérivation (7) au moyen de la deuxième soupape (8), lorsque la soupape de réservoir (10) du réservoir (4) est exposée à la pression d'alimentation de réservoir croissante.

5. Procédé selon l'une quelconque des revendications précédentes, **caractérisé en ce qu'**avant le remplissage il règne en amont de la première soupape (5) dans la conduite d'alimentation de réservoir (3) une pression maximale prédéfinie notamment de 875 bars.
